# EUROPÄISCHE PATENTSCHRIFT

(11) **EP 1 962 557 B1**
(45) Veröffentlichungstag und Bekanntmachung des Hinweises auf die Patenterteilung: **21.09.2011**
(21) Anmeldenummer: 08101833.5
(22) Anmeldetag: 21.02.2008
(51) Int. Cl.: H04R 25/00

(54) **Hörvorrichtung mit einem speziellen Energieaufnahmesystem und entsprechendes Verfahren**
Hearing device with a special energy reception system and corresponding method
Appareil auditif doté d'un système de réception d'énergie spécial et procédé correspondant

(30) Priorität: 26.02.2007 DE 102007009176
(43) Veröffentlichungstag der Anmeldung: 27.08.2008
(73) Patentinhaber: Siemens Audiologische Technik GmbH, 91058 Erlangen (DE)
(72) Erfinder: Boguslavskij, Mihail, 96450 Coburg (DE); Hies, Thomas, 259293 Singapore (SG); Husung, Kunibert, 91052 Erlangen (DE)
(74) Vertreter: Maier, Daniel Oliver

(56) Entgegenhaltungen:
- US-A1- 2005 095 498
- US-B1- 6 265 100
- US-B1- 6 798 716

## Beschreibung

Die vorliegende Erfindung betrifft eine Hörvorrichtung mit einer Signalverarbeitungseinrichtung, einer Energiespeichereinrichtung, die ladbar ist und die die Signalverarbeitungseinrichtung mit Strom versorgt, und einer Wandlereinrichtung zum Wandeln eines akustischen Signals in ein elektrisches Signal oder umgekehrt oder alternativ einer Kommunikationsspule, zum Senden und/oder Empfangen von elektromagnetischen Steuersignalen oder Datensignalen. Darüber hinaus betrifft die vorliegende Erfindung ein entsprechendes Verfahren zum Laden einer Energiespeichereinrichtung einer Hörvorrichtung. Unter dem Begriff "Hörvorrichtung" wird hier insbesondere ein am Ohr tragbares Gerät, vor allem ein Hörgerät, ein Headset, ein Kopfhörer und dergleichen verstanden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO) und In-dem-Ohr-Hörgeräte (IdO), z.B. auch Concha-Hörgeräte oder Kanal-Hörgeräte (CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

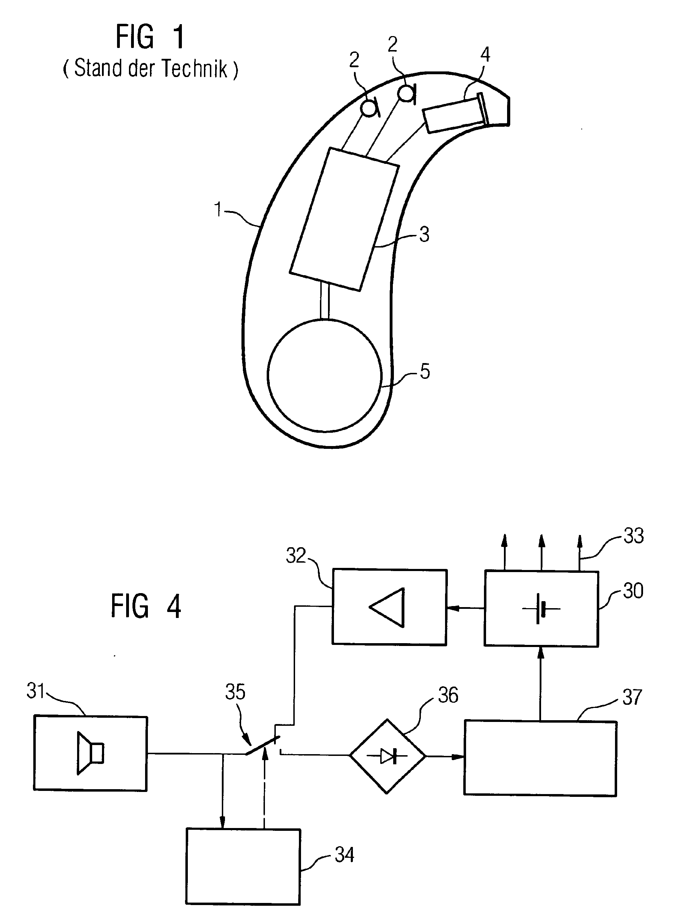

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

Akkus oder Batterien eines Hörgeräts zu laden bedeutet vielfach, den Akku bzw. die Batterie aus dem Hörgerät herauszunehmen, in ein Ladegerät zu stecken und aufzuladen. Nach dem Aufladen muss die in der Regel sehr kleine und schlecht handhabbare Batterie aus dem Ladegerät entnommen und wieder in das Hörgerät eingesetzt werden. Ein alternatives Ladeverfahren besteht darin, dass der Akku im Hörgerät belassen und dort drahtgebunden geladen wird. Hierzu sind entsprechende metallische Kontakte am Hörgerät vorzusehen. Nachteilig an diesen Kontakten ist, dass sie meist aus dem Gehäuse herausstehen und mit diesem nicht bündig sind. Infolgedessen können sie leicht verschmutzen.

Weiterhin ist bekannt, Energie drahtlos an ein Hörgerät zu übertragen. Der Energietransfer hierfür kann durch elektrische (kapazitiv), magnetische (induktiv) bzw. elektromagnetische Felder erfolgen. Ein derartiges Laden erfordert mindestens ein zusätzliches Bauteil im Hörgerät, das das entsprechende Feld in elektrische Energie umwandelt.

Meist wird für das drahtlose Laden von Akkus ein induktives Verfahren benutzt. Der Sender arbeitet mit einer Sendespule und der Empfänger der Energie verwendet ebenfalls eine Spule zur Aufnahme der Energie. Derartige Spulen sind verhältnismäßig groß, was gerade bei Hörgeräten dem ständig angestrebten Ziel der Miniaturisierung zuwider läuft.

Aus der Patentschrift DE 199 15 846 C1 ist ein implantierbares System zur Rehabilitation einer Hörstörung bekannt. Es weist eine drahtlose Telemetrieeinrichtung zur Übertragung von Daten zwischen einem implantierbaren Teil des Systems und einer externen Einheit sowie eine Energieversorgungsanordnung auf. Die implantierbare Einheit kann eine Energieempfangsschaltung zur implantatseitigen Bereitstellung von Nachladeenergie enthalten.

Darüber hinaus offenbart die Druckschrift DE 39 18 329 A1 ein Hörgerät zur elektrischen Reizung des Innenohrs. Es besitzt eine aus einer Energieversorgung gespeiste externe Signalverarbeitungselektronik zum Umsetzen von Mikrofonsignalen in für die Innenohrreizung geeignete Ausgangssignale. Die Signalverarbeitungselektronik versorgt eine ebenfalls implantierbare Empfängerschaltung auf drahtlosem Weg auch mit Betriebsenergie.

Die US 2005/0095498 A1 beschreibt eine wiederaufladbare Knopfzellenbatterie für den Einsatz in Hörgeräten, welche die für das Aufladen erforderliche Steuerelektronik vollständig selbst umfasst. Die für den Ladevorgang erforderliche Energie wird durch ein externes Ladegerät bereitgestellt, das die Ladeenergie berührungslos an das Hörgerät überträgt. Hierzu sendet das Ladegerät über einen Transmitter Radiofrequenzstrahlung aus, die von der Induktionsspule des Hörgerätelautsprechers empfangen und in elektrischen Strom zum Laden der Batterie überführt wird. Alternativ kann auch akustische Energie über die Hörgerätemikrofone aufgenommen und in elektrische Energie umgeformt werden.

Aus der US 6,265,100 B1 ist ein Hörgerät bekannt, dessen wiederaufladbare Batterie sich mittels einer Ladestation optisch oder induktiv aufladen lässt. Die induktive Ladung erfolgt über die elektromagnetische Ankopplung eines Schwingkreises der Ladestation an den Schwingkreis des Hörgeräts. Die typische Übertragungsfrequenz zwischen der ladestationsseitigen Spule und der hörgerätseitigen Spule beträgt 7 bis 10 MHz.

Die Aufgabe der vorliegenden Erfindung besteht somit darin, Energie an eine Hörvorrichtung übertragen zu können, ohne viel Bauraum in der Hörvorrichtung hierfür zu benötigen.

Erfindungsgemäß wird diese Aufgabe gelöst durch eine Hörvorrichtung mit einer Signalverarbeitungseinrichtung, einer Energiespeichereinrichtung, die ladbar ist und die die Signalverarbeitungseinrichtung mit Strom versorgt, und einem Lautsprecher zum Wandeln eines akustischen Signals in ein elektrisches Signal oder umgekehrt, wobei eine Ladeschaltung zwischen den Lautsprecher und die Energiespeichereinrichtung geschaltet ist, so dass Energie, die akustisch an den Lautsprecher übertragen wird, elektrisch über die Ladeschaltung in die Energiespeichereinrichtung einspeisbar ist.

Darüber hinaus wird erfindungsgemäß bereitgestellt ein Verfahren zum Laden einer Energiespeichereinrichtung einer Hörvorrichtung nach Anspruch 8.

In vorteilhafter Weise ist es so möglich, einen akustoelektrischen bzw. elektroakustischen Wandler, der in der Regel in jeder Hörvorrichtung ohnehin vorhanden ist, auch für die Energieeinspeisung zu nutzen. Es kann also somit ein spezielles Bauteil für die Energieeinspeisung entfallen, so dass das gesamte Volumen der Hörvorrichtung reduziert werden kann.

Die Wandlereinrichtung der erfindungsgemäßen Hörvorrichtung umfasst einen Lautsprecher bzw. Hörer. Damit erhält der Lautsprecher die doppelte Funktionalität der Schallausgabe und der Energieaufnahme.

Die Wandlereinrichtung kann auf dem elektrodynamischen Prinzip beruhen. Dabei wird ausgenutzt, dass durch Schall erzeugte Schwingungen eines Magneten zur Induktion eines Stroms verwendbar sind.

Die Wandlereinrichtung kann aber auf einem piezoelektrischen Prinzip beruhen. Demnach können auch piezoelektrische Lautsprecher für die Energiewandlung herangezogen werden.

Für die elektromagnetische Einkopplung von Energie in die Wandlereinrichtung sollte diese ein Kunststoffgehäuse aufweisen. Dadurch kann gewährleistet werden, dass die einzuspeisende Energie nahezu ungedämpft eingekoppelt werden kann.

Für den Fall, dass die Hörvorrichtung eine Kommunikationseinheit zur drahtlosen Übertragung beispielsweise an eine andere Hörvorrichtung aufweist, ist es von Vorteil, wenn das Kunststoffgehäuse der Wandlereinrichtung eine erste Abschirmung gegen elektromagnetische Strahlung oberhalb einer ersten Grenzfrequenz, die beispielsweise mindestens 15 kHz und insbesondere mindestens 500 kHz beträgt, aufweist. Damit kann eine Strahlung der Wandlereinrichtung abgeschirmt werden, die eine Sendeempfangseinheit stören würde, welche typischerweise bei 120 kHz (alte Geräte) oder 3,3 MHz (neue Geräte) überträgt.

Darüber hinaus kann das Kunststoffgehäuse eine zweite Abschirmung gegen elektromagnetische Strahlung unterhalb einer zweiten Grenzfrequenz, die höchstens 20 kHz und insbesondere höchstens 12 kHz beträgt, aufweisen. Dadurch kann erreicht werden, dass der Hörer das Audioband beeinflusst, in dem die Hörvorrichtung beispielsweise über eine Telefonspule Audiosignale empfängt. Gegebenenfalls erfolgt eine kombinierte Abschirmung mit der ersten und zweiten Abschirmung, so dass sich eine Abschirmungslücke in einem Bereich ergibt, in dem die Energieübertragung stattfinden soll.

Gemäß einer weiteren Ausführungsform ist die Hörvorrichtung als Hörgerät mit externem Hörer realisiert, wobei die Wandlereinrichtung den externen Hörer umfasst. In diesem Fall lässt sich der Hörer in den Ladeschacht eines Ladegeräts einführen und es kann wegen der geringen Größe des Hörers bzw. des Ladeschachts eine sehr effiziente Energieeinkopplung gewährleistet werden. Ein ähnlicher Vorteil ergibt sich bei kleinen IdO- bzw. CIC-Geräten.

Des Weiteren wird ein Ladegerät mit einem Schallgenerator zum Erzeugen eines akustischen Energieübertragungssignals, mit dem eine oben beschriebene Hörvorrichtung mit Energie versorgbar ist, vorgeschlagen. Dieses Ladegerät kann ein Kopplungselement zum akustischen Koppeln des akustischen Ladegeräts an die Hörvorrichtung aufweisen. Insbesondere kann ein Schlauch vorgesehen sein, der ein akustisches Energieübertragungssignal, beispielsweise in den Tragehaken eines Hinter-dem-Ohr-Hörgeräts überträgt.

Die vorliegende Erfindung wird nun anhand der beigefügten Zeichnungen näher erläutert. In denen zeigen:
- FIG 1: einen prinzipiellen Aufbau eines Hörgeräts gemäß dem Stand der Technik;
- FIG 2: ein Hörgerät mit induktivem Ladesystem, das nicht Teil der vorliegenden Erfindung ist;
- FIG 3: ein Hörgerät mit akustischem Ladesystem gemäß der vorliegenden Erfindung;
- FIG 4: ein Blockschaltdiagramm einer Ladeschaltung zum La- den einer Batterie über einen Hörer;
- FIG 5: ein Blockschaltbild eines Hörgeräts mit induktiver Ladevorrichtung mittels Hörerwicklung und
- FIG 6: eine Skizze eines Hörermotors mit einer Ladespule.

Die nachfolgend näher geschilderten Ausführungsbeispiele stellen bevorzugte Ausführungsformen der vorliegenden Erfindung dar.

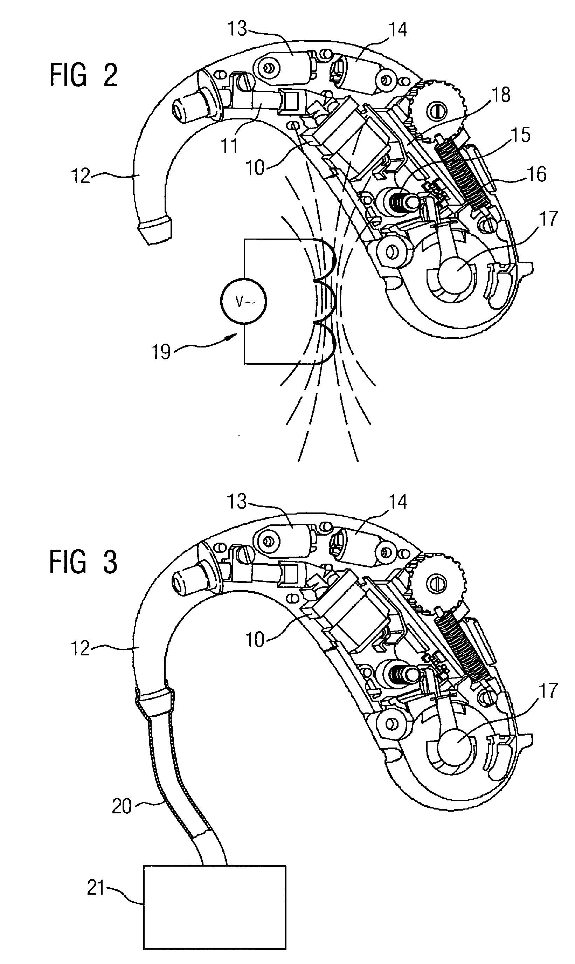

In FIG 2 ist ein Hinter-dem-Ohr-Hörgerät dargestellt, das in üblicher Weise einen Hörer 10 aufweist, der über ein rohrförmiges Koppelelement 11 akustisch an einen Tragehaken 12 gekoppelt ist, welcher seinerseits den Ausgangsschall des Hörers 10 über einen nicht dargestellten Hörerschlauch an das Ohr des Hörgeräteträgers weiterleitet. Darüber hinaus besitzt das in FIG 2 dargestellte Hörgerät zwei Mikrofone 13, 14, Kommunikationsspule 15 zur Datenübertragung insbesondere an ein zweites Hörgerät, eine Telefonspule 16, eine Batterie 17 und eine Leiterplatte 18 mit einer üblichen Signalverarbeitungseinheit.

Körperlich getrennt von dem Hörgerät ist ein induktives Ladegerät 19 in FIG 2 angedeutet. Das induktive Ladegerät 19 ist nicht Teil der Erfindung, dient jedoch zu deren besseren Verständnis. Dieses induktive Ladegerät 19 erzeugt ein magnetisches Wechselfeld. Mit diesem magnetischen Wechselfeld können zahlreiche Komponenten des Hörgeräts in Wechselwirkung treten. Wenn beispielsweise der Hörer 10 nach dem elektrodynamischen Prinzip arbeitet, weist er eine elektrische Spule auf, in der das magnetische Wechselfeld einen Strom induzieren kann. Dieser Strom lässt sich mit Hilfe einer Ladeschaltung (vergleiche FIG 4) zum Laden der Batterie 17 nutzen.

In gleicher Weise, jedoch ebenfalls nicht Teil der Erfindung, können die Mikrofone 13, 14 Energie aus dem magnetischen Wechselfeld gewinnen, wenn sie nach dem elektrodynamischen Prinzip arbeiten und entsprechende Spulen aufweisen. Weitere Spulen für die Energieaufnahme könnten die Kommunikationsspule 15 sowie die Telefonspule 16 sein. Solche Spulen sind jedoch ebenso nicht Teil der Erfindung. In jedem Fall wird zur Energiegewinnung ein Wandler bzw. eine Spule eingesetzt, der/die im Hörgerät bereits für einen anderen Zweck vorhanden ist. Eine spezielle Spule für die Energiegewinnung ist also nicht vorgesehen, wenngleich sie beispielsweise zusätzlich als Schleifenantenne auf der Leiterplatte 18 vorgesehen sein könnte.

In dem Ausführungsbeispiel von FIG 3 wird das gleiche bereits in FIG 2 gezeigte Hörgerät über einen Schlauch 20 mit einer akustischen Energiequelle 21 verbunden. Diese erzeugt einen Schall als Energieträger, der sich über den Schlauch 20 und den Tragehaken 12 zum Hörer 10 fortpflanzt. Dort wird er in elektrische Energie gewandelt. Dies kann beispielsweise nach dem elektrodynamischen Prinzip oder dem piezoelektrischen Prinzip erfolgen. Wiederum wird eine geeignete Ladeschaltung (vergleiche FIG 4) zum Laden der Batterie 16 mit Hilfe des gewonnenen elektrischen Signals eingesetzt. Prinzipiell können auch die Mikrofone 13, 14 von der akustischen Energiequelle 21 mit akustischer Energie versorgt werden. Auch sie wandeln dann nach dem jeweiligen Prinzip die akustische Energie in elektrische Energie um. Diese Art von Energie geminnung durch die Mikrofone ist jedoch nicht Teil der Erfindung.

Bei der Energiegewinnung mit Hilfe des Hörers 10 wird dieser also neben seiner üblichen Funktion als elektroakustischer Wandler auch als akustoelektrischer Wandler eingesetzt. Im Falle der Mikrofone 13, 14 wird für die Energiegewinnung das akustoelektrische Wandlerprinzip eingesetzt, das sie auch für ihren üblichen Einsatz zur Schallaufnahme nutzen. Die Aufladung durch Mikrofone fällt jedoch nicht unter den Schutzumfang der Erfindung, wie in den Ansprüchen definiert.

In FIG 4 ist exemplarisch eine Ladeschaltung dargestellt, die zum Laden einer Batterie 30 dient, wenn beispielsweise die Energie über den Hörer 31 gewonnen wird. Die Batterie 30 versorgt in üblicher Weise den Verstärker 32 des Hörgeräts. Daneben versorgt sie auch andere Schaltungskomponenten, wie dies in FIG 4 mit den Pfeilen 33 angedeutet ist. Das Ausgangssignal des Verstärkers 32 wird dem Lautsprecher bzw. Hörer 31 zugeführt.

Zur Energiegewinnung wird der Hörer 31 umgekehrt betrieben, weshalb sein Anschluss durch einen Detektor 34 überwacht wird. Dieser stellt beispielsweise anhand einer speziellen Signalfolge ein Ladesignal fest. Daraufhin unterbricht er mit einem Schalter 35 den Signalpfad zwischen dem Verstärker 32 und dem Hörer 31 und leitet das Ladesignal vom Hörer 31 weiter an einen Gleichrichter 36. Das Ausgangssignal des Gleichrichters 36 wird einem Spannungsregler 37 zugeführt, der seinerseits mit geeigneter Spannung die Batterie 30 lädt. Auf diese Weise kann von jedem Wandler ein Ladesignal detektiert und abgegriffen werden. Die Komponenten 34 bis 37 der Ladeschaltung sind entweder ebenfalls bereits im Hörgerät vorhanden oder sie nehmen beispielsweise auf der Leiterplatte 18 nur verhältnismäßig wenig Platz ein, wenn sie zusätzlich vorzusehen sind.

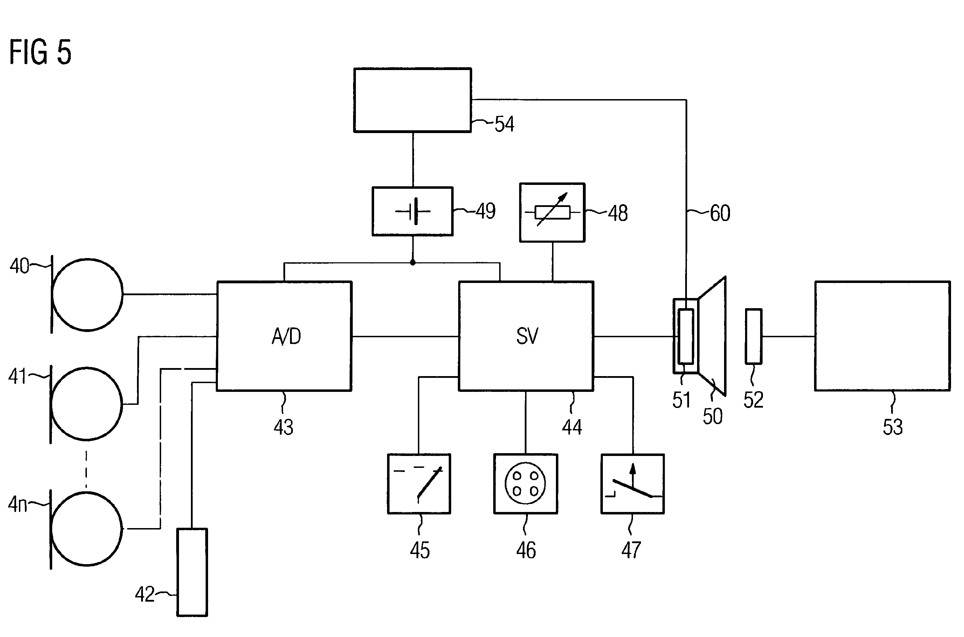

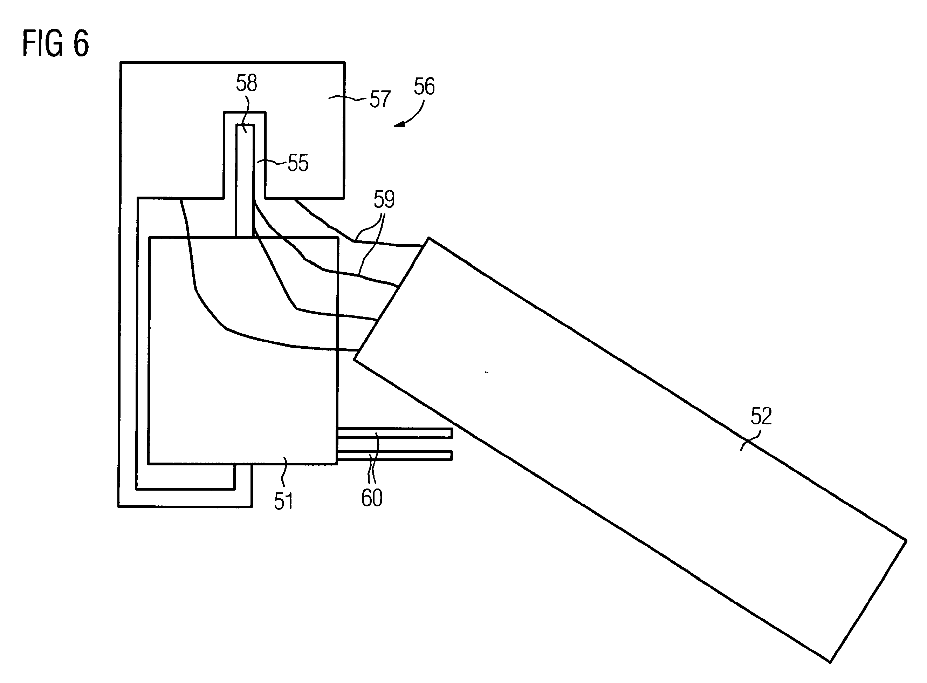

Ein weiteres Ausführungsbeispiel einer Hörvorrichtung, das nicht Teil der Erfindung ist, aber zu deren besseren Verständnis beiträgt, ist in den FIG 5 und 6 dargestellt. FIG 5 zeigt dabei ein Blockschaltbild der wesentlichen Komponenten eines Hörgeräts sowie eines induktiven Ladegeräts. Das Hörgerät besitzt eine Vielzahl von Mikrofonen 40, 41, ..., 4n. Die Mikrofone dienen jeweils als Eingangseinheit für akustische Signale. Weiterhin ist eine Telefonspule 42 als Eingangseinheit für die Vorverarbeitungseinheit 43 vorgesehen. Die Vorverarbeitungseinheit 43 besteht in der Regel aus einem Vorverstärker mit A/D-Wandler und einem Spannungsregler. Das Ausgangssignal der Vorverarbeitungseinheit 43 wird einer digitalen Signalverarbeitung 44 mit getakteter Endstufe zugeführt. Die digitale Signalverarbeitung 44 ist von einem Programmschalter 45, einer Programmierbuchse 46, eines Situationstaste 47 und einem VC-Steller 48 ansteuerbar. Eine wiederaufladbare Batterie 49 versorgt die Vorverarbeitungseinheit 43 und die digitale Signalverarbeitung 44. Das Ausgangssignal der digitalen Signalverarbeitung 44 wird einem Hörer 50 zugeführt. Dieser besitzt ein Kunststoffgehäuse mit oder ohne Spezialabschirmung. Der nach dem elektrodynamischen Prinzip arbeitende Hörer 50 besitzt ferner eine elektrische Spule 51. Sie dient nicht nur zur Wandlung der elektrischen Signale von der Signalverarbeitung 44 in entsprechende Magnetfelder, sondern auch umgekehrt zur Wandlung induktiv empfangener Signale in elektrische Signale. Diese induktiven Signale stammen von einer Sendespule 52 eines induktiven Ladegeräts 53. Die von der Ladespule 52 an die Spule 51 des Hörers 50 übertragene Energie wird in Form eines elektrischen Signals an eine Ladeelektronik 54 des Hörgeräts übertragen. Dort wird sie in geeignete Form gebracht und in die Batterie 49 eingespeist.

Alternativ könnten auch die Mikrofone 40, 41, ..., 4n zur Energieübertragung verwendet werden, wenn sie nach dem elektrodynamischen Prinzip arbeiten. Dann müsste die Ladespule 52 die Energie an die Mikrofone 40 bis 4n übertragen und die Mikrofone 40 bis 4n müssten entsprechend mit der Ladeelektronik 54 verbunden sein. Die Aufladung durch Mikrofone ist jedoch nicht Teil der Erfindung.

Nachfolgend wird die Funktion des Hörhilfegeräts näher erläutert, in dessen Hörerwicklung Energie induktiv eingekoppelt wird. Zur magnetischen Energieübertragung benötigt man bekanntermaßen einen Transformator. Die Primärwicklung wird hier durch die Lade- bzw. Sendespule 52 des Ladegeräts 53 gebildet. Die Sekundärwicklung wird durch den magnetischen Kreis des Hörers 50 realisiert. Störend hierbei wirkt sich allerdings ein Hörergehäuse aus, das üblicherweise aus Metall hergestellt ist. Es dient typischerweise als magnetische Abschirmung des Hörermagnetfelds und lässt somit auch keine äußeren Magnetfelder eindringen. Wird allerdings ein Hörer mit Kunststoffgehäuse hergestellt, so hat dieser nicht nur den Vorteil der kostengünstigeren Herstellung, sondern auch den Vorteil, dass die induktive Energieübertragung ungehindert vonstatten gehen kann. Insbesondere kann ein derartiger Kunststoff-Hörer vorteilhaft für Hörhilfegeräte mit externem Hörer eingesetzt werden.

Für die Bereitstellung der Energie kann ein einfaches Ladegerät 53 mit einer kleinen Mulde zum Einstecken des akustischen Wandlers verwendet werden. Im Falle eines externen Hörers wird dieser in die Mulde eingesteckt. IdO bzw. CIC-Geräte können vollständig in eine derartige Mulde zum Laden eingebracht werden. Bei HdO-Hörgeräten kann der Hörerteil oder der Mikrofonteil (je nachdem welcher Wandler für die Energieeinspeisung genutzt wird) in die Mulde eingeschoben werden. Die Verwendung des Mikrofonteils für die Energieeinspeisung ist jedoch nicht Teil der Erfindung. In FIG 6 ist das Prinzip der induktiven Einspeisung, das nicht Teil der Erfindung ist, aber zu deren besseren Verständnis beiträgt, anhand eines Hörermotors und einer Ladespule skizzenhaft dargestellt. Das Kunststoffgehäuse und die Membran des Hörers sind nicht dargestellt. Die magnetische Energie wird über die Ladespule 52, die hier als Luftspule realisiert ist und die Primärspule darstellt, in einen Luftspalt des magnetischen Kreises 56 des Hörermotors eingekoppelt. Dieser magnetische Kreis 56 besteht in der Regel aus einem Blechpaket 57 gegebenenfalls mit Magneten (nicht eingezeichnet) und einer magnetisch damit verbundenen Zunge 58. Diese wird mit Hilfe der Spule 51 ausgelenkt und bewegt eine Membran (nicht dargestellt) des Hörers 50. Feldlinien 59 deuten ein Magnetfeld an, das von der Ladespule 52 in den Luftspalt 55 bzw. den magnetischen Kreis 56 eingekoppelt wird. Der entsprechende magnetische Fluss in dem magnetischen Kreis 56 induziert in der Spule 51 einen elektrischen Strom, der über Anschlussleitungen 60 an die Ladeelektronik 54 weitergeführt wird.

Damit die elektrische Energie möglichst dämpfungsfrei in den Hörer 50 eingekoppelt werden kann, besitzt dieser ein Kunststoffgehäuse. Dieses Kunststoffgehäuse kann mit einer elektrischen Leitschicht versehen sein, um eine elektromagnetische Abschirmung zu gewährleisten. Somit werden empfindliche Baugruppen (Sende-Empfangseinrichtung zur drahtlosen Datenübertragung beispielsweise zwischen Hörgeräten bzw. zum Empfang von Audiodaten) im Hörhilfegerät nicht gestört.

Bei Hörsystemen mit Telefonspule ist eine magnetische Hörerabschirmung unbedingt erforderlich, damit eine Datenübertragung im Audiobereich überhaupt möglich ist. So ist es beispielsweise notwendig, den Hörer im Übertragungsbereich unterhalb von 20 kHz zu schirmen, damit von der Telefonspule des Hörhilfegeräts Audiodaten induktiv im Audiobereich störungsfrei empfangen werden können. Gegebenenfalls kann die Grenzfrequenz dieser Abschirmung auch unter 20 kHz, z.B. auf 12 kHz oder 10 kHz, gelegt werden. Die induktive Energieübertragung kann dann in einem Frequenzbereich oberhalb dieser Grenzfrequenz also zum Beispiel oberhalb von 12 kHz oder 20 kHz, z.B. bei 50 kHz, stattfinden.

Für den Fall, dass beispielsweise eine breitbandige Datenübertragung zwischen zwei Hörgeräten bei 3,3 MHz in dem Hörsystem ermöglicht werden soll, muss der Hörer mit einer entsprechenden HF-Abschirmung ausgestattet sein. Die Abschirmung besitzt dann beispielsweise eine Grenzfrequenz von 500 kHz, so dass sie von Strahlung mit darüber liegender Frequenz nicht bzw. nur stark gedämpft durchdrungen werden kann. Diese Grenzfrequenz kann aber auch niedriger liegen, beispielsweise bei 100 kHz oder 15 kHz, wenn für die Energieübertragung eine tiefer liegende Frequenz verwendet wird. Gegebenenfalls kann diese Abschirmung auch mit der erstgenannten Abschirmung im Audiobereich kombiniert werden, so dass lediglich für die Energieübertragung eine Frequenzlücke besteht, in der wirksam Energie auf den Hörer bzw. den ansonsten geschirmten Wandler übertragen werden kann. Bei geeigneter Abstimmung der Gehäuseschirmung sind auch Standard-HdOs mit dieser Ladetechnik realisierbar.

Durch die induktive Einspeisung von Energie in wiederaufladbare Batterien von Hörhilfegeräten ist es komfortabel möglich, die Geräte mit einer entsprechenden Ladestation täglich zu laden. Da sekundärseitig keine zusätzliche Ladespule notwendig ist, können die entsprechenden Geräte trotz der Nutzung dieser induktiven Ladetechnik wesentlich kleiner gebaut werden. So ist es beispielsweise auch möglich, gerade kleine IdO und CIC-Geräte unter Ausnutzung der Doppelfunktion des Hörers induktiv zu laden.

Auch hinsichtlich der Ladegeräte ergeben sich einige Vorteile, denn diese können verhältnismäßig einfach aufgebaut sein. Sie besitzen beispielsweise lediglich eine Lademulde, in die das gesamte Hörgerät oder nur der externe Hörer des Hörgeräts eingelegt wird. Dabei kann die Lademulde relativ unabhängig von der Hörgeräte-Gehäuseform sein.

## Patentansprüche

1. Hörvorrichtung mit
- einer Signalverarbeitungseinrichtung,
- einer Energiespeichereinrichtung (17, 30, 49), die ladbar ist und die die Signalverarbeitungseinrichtung mit Strom versorgt, und
- einem Lautsprecher (10, 31, 50) zum Wandeln eines akustischen Signals in ein elektrisches Signal oder umgekehrt,
**dadurch gekennzeichnet, dass**
- eine Ladeschaltung (34 bis 37, 54), die wischen den Lautsprecher (10, 31, 50) und die Energiespeichereinrichtung (17, 30, 49) geschaltet ist, so dass Energie, die akustisch an den Lautsprecher (10, 31, 50) übertragen wird, elektrisch über die Ladeschaltung (34 bis 37, 54) in die Energiespeichereinrichtung (17, 30, 49) einspeisbar ist.

2. Hörvorrichtung nach Anspruch 1, wobei der Lautsprecher (10, 31, 50) auf dem elektrodynamischen Prinzip beruht.

3. Hörvorrichtung nach Anspruch 1, wobei der Lautsprecher (10, 31, 50) auf dem piezoelektrischen Prinzip beruht.

4. Hörvorrichtung nach einem der vorhergehenden Ansprüche, wobei der Lautsprecher (10, 31, 50) ein Kunststoffgehäuse aufweist.

5. Hörvorrichtung nach Anspruch 4, wobei das Kunststoffgehäuse eine erste Abschirmung gegen elektromagnetische Strahlung oberhalb einer ersten Grenzfrequenz, die mindestens 15 kHz und insbesondere mindestens 500 kHz beträgt, aufweist.

6. Hörvorrichtung nach Anspruch 4 oder 5, wobei das Kunststoffgehäuse eine zweite Abschirmung gegen elektromagnetische Strahlung unterhalb einer zweiten Grenzfrequenz, die höchstens 20 kHz und insbesondere höchstens 12 kHz beträgt, aufweist.

7. Hörvorrichtung nach einem der vorhergehenden Ansprüche, die als Hörgerät mit externem Hörer realisiert ist, wobei der Lautsprecher (10, 31, 50) den externen Hörer umfasst.

8. Verfahren zum Laden einer Energiespeichereinrichtung (17, 30) einer Hörvorrichtung mit einem Lautsprecher (10, 31, 50),
**gekennzeichnet durch**
- Übertragen von akustischer Energie an die Hörvorrichtung,
- Wandeln der akustischen Energie in elektrische Energie in dem Lautsprecher (10, 31, 50),
- Einspeisen der elektrischen Energie in die Energiespeichereinrichtung (17, 30).

## Claims

1. Hearing apparatus with
- a signal processing device,
- an energy storage device (17, 30, 49), which can be charged and which supplies power to the signal processing device, and
- a loudspeaker (10, 31, 50) for converting an acoustic signal into an electrical signal or vice versa,
**characterised in that**
- a charging circuit (34 to 37, 54), which is connected between the converter device (10, 31, 50) and the energy storage device (17, 30, 49) so that energy, which is acoustically or electromagnetically transmitted to the loudspeaker (10, 31, 50), can be electrically supplied to the energy storage device (17, 30, 49) by way of the charging circuit (34 to 37, 54).

2. Hearing apparatus according to claim 1, with the loudspeaker (10, 31, 50) being based on the electrodynamic principle.

3. Hearing apparatus according to claim 1, with the loudspeaker (10, 31, 50) being based on the piezoelectric principle.

4. Hearing apparatus according to one of the preceding claims, with the converter device (10, 31, 50) comprising a plastic housing.

5. Hearing apparatus according to claim 4, with the plastic housing comprising a first shielding against electromagnetic radiation above a first limit frequency, which amounts to at least 15 kHz and in particular at least 500 kHz.

6. Hearing apparatus according to claim 4 or 5, with the plastic housing comprising a second shielding against electromagnetic radiation below a second limit frequency, which amounts at the most to 20 kHz and in particular at the most to 12 kHz.

7. Hearing apparatus according to one of the preceding claims, which is realised as a hearing device with an external receiver, with the loudspeaker (10, 31, 50) including the external receiver.

8. Method for charging an energy storage device (17, 30) of a hearing apparatus with a loudspeaker (10, 31, 50), **characterised by**
- transmission of acoustic energy to the hearing apparatus,
- conversion of the acoustic energy into electrical energy in the loudspeaker (10, 31, 50),
- supply of the electrical energy to the energy storage device (17, 30).

## Revendications

1. Prothèse auditive comprenant
- un dispositif de traitement du signal,
- un dispositif (17, 30, 49) d'accumulation d'énergie qui peut être chargé et qui alimente en courant le dispositif de traitement du signal, et
- un haut-parleur (10, 31, 50) pour la transformation d'un signal acoustique en un signal électrique ou inversement,
**caractérisée**
- **par** un circuit (34 à 37, 54) de charge qui est monté entre le haut-parleur (10, 31, 50) et le dispositif (17, 30, 49) d'accumulation d'énergie, de manière à pouvoir injecter électriquement par le circuit (34 à 37, 54) de charge dans le dispositif (17, 30, 49) d'accumulation d'énergie, de l'énergie qui est transmise acoustiquement au haut-parleur (10, 31, 50).

2. Prothèse auditive suivant la revendication 1, dans laquelle le haut-parleur (10, 31, 50) repose sur le principe électrodynamique.

3. Prothèse auditive suivant la revendication 1, dans laquelle le haut-parleur (10, 31, 50) repose sur le principe piézoélectrique.

4. Prothèse auditive suivant l'une des revendications précédentes, dans laquelle le haut-parleur (10, 31, 50) a un boîtier en matière plastique.

5. Prothèse auditive suivant la revendication 4, dans laquelle le boîtier en matière plastique a un premier blindage vis-à-vis du rayonnement électromagnétique au-dessus d'une première fréquence limite qui est d'au moins de 15 khz et notamment d'au moins 500 kHz.

6. Prothèse auditive suivant la revendication 4 ou 5, dans laquelle le boîtier en matière plastique a un deuxième blindage vis-à-vis du rayonnement électromagnétique en dessous d'une deuxième fréquence limite qui est au plus de 20 kHz et notamment au plus de 12 kHz.

7. Prothèse auditive suivant l'une des revendications précédentes, qui est réalisée comme appareil auditif ayant un écouteur extérieur, le haut-parleur (10, 31, 50) comprenant l'écouteur extérieur.

8. Procédé de charge d'un dispositif (17, 30) d'accumulation d'énergie d'une prothèse auditive ayant un haut-parleur (10, 31, 50),
**caractérisé par**
- une transmission d'énergie acoustique à la prothèse auditive,
- une transformation de l'énergie acoustique en énergie électrique dans le haut-parleur (10, 31, 50),
- une injection de l'énergie électrique dans le dispositif (17, 30) d'accumulation d'énergie.
